# EUROPÄISCHE PATENTANMELDUNG

(11) **EP 2 610 279 A1**
(43) Veröffentlichungstag der Anmeldung: **03.07.2013**
(21) Anmeldenummer: 12198552.7
(22) Anmeldetag: 20.12.2012
(51) Int. Cl.: C08G 69/30, C08K 5/16

(54) **Verfahren zur Herstellung eines Formteils aus einer Polyamidformmasse mit verbesserter Hydrolysebeständigkeit**

(30) Priorität: 29.12.2011 DE 102011090092
(71) Anmelder: Evonik Degussa GmbH, 45128 Essen (DE)
(72) Erfinder: Pawlik, Andreas, Dr., 45657 Recklinghausen (DE); Dowe, Andreas, 46325 Borken (DE); Franosch, Juergen, 45770 Marl (DE); Häger, Harald, Dr., 59348 Lüdinghausen (DE); Baumann, Franz-Erich, Dr., 48249 Dülmen (DE); Beuth, Reinhard, 45772 Marl (DE)

(57) **Zusammenfassung**

Ein Verfahren zur Herstellung eines Formteils unter Aufkondensierung einer Polyamidformmasse, das folgende Schritte enthält:
a) Eine Polyamidformmasse wird bereitgestellt, wobei die Endgruppen des Polyamids zu mindestens 50 % als Aminogruppen vorliegen,
b) eine Mischung der Polyamidformmasse und 0,1 bis 5 Gew.-%, bezogen auf die Polyamidformmasse, eines Oligo- oder Polycarbodiimids wird hergestellt, wobei hier im Wesentlichen keine Aufkondensierung erfolgt,
c) die Mischung wird gegebenenfalls gelagert und/oder transportiert und
d) die Mischung wird anschließend zum Formteil verarbeitet, wobei erst in diesem Schritt die Aufkondensierung erfolgt

ermöglicht die Herstellung von hydrolysebeständigen Formteilen mit großdimensionalen Geometrien.

## Beschreibung

Die Erfindung betrifft ein Verfahren zur Herstellung eines Formteils aus einer Polyamidformmasse mit verbesserter Hydrolysebeständigkeit, wobei gleichzeitig das Molekulargewicht des Polyamids und die Schmelzesteifigkeit der Formmasse erhöht werden.

Polyamide und insbesondere Polyamide mit einer niedrigen Konzentration an Carbonamidgruppen wie PA11 und PA12 haben aufgrund ihres Eigenschaftsprofils vielfältige technische Einsatzgebiete gefunden. Hier sind unter anderem Leitungen zum Transport von Kühlmitteln in der Automobilindustrie oder auch Ummantelungsmaterialien im Bereich der Offshore-Ölförderung zu nennen, bei denen insbesondere eine gute Hydrolysebeständigkeit gefragt ist. Für derartige Anwendungen werden allerdings in zunehmendem Maße Materialien mit noch höherer Hydrolysebeständigkeit insbesondere bei höheren Temperaturen verlangt.

Bei der Extrusion von Rohren, Profilen und anderen Hohlkörpern kann es jedoch, insbesondere bei großdimensionalen Geometrien, unter anderem bedingt durch die Gravitationskraft, nach dem Austritt aus dem Werkzeug zu diversen Schwierigkeiten kommen. Ein Durchhängen des austretenden Schmelzeschlauches ist hier ein optisches Zeichen für eine niedrige Schmelzeviskosität. Die Schwerkraft führt zu einer Verschiebung der Wanddicken, so dass eine unregelmäßige Verteilung der Wanddicke des Hohlkörpers auftreten kann. Zudem sind die erzielbaren Geometriegrößen und Geometrieformen bei der Profilextrusion stark begrenzt. Die Schmelzesteifigkeit herkömmlicher Polyamide reicht hier nicht aus, um die bevorzugten Geometrien technisch, wirtschaftlich, maßhaltig und zuverlässig herstellen zu können. Eine niedrige Schmelzesteifigkeit führt darüber hinaus zu einem unruhigen, instabilen Extrusionsverlauf, der sich dadurch äußern kann, dass der Schmelzestrang unruhig in die Kalibriereinheit einläuft. Dies kann zu Produktionsstörungen führen. Besitzt der Schmelzeschlauch nach Verlassen der Düse hingegen eine hohe Schmelzesteifigkeit, läuft er deutlich stabiler und wird unempfindlicher gegenüber äußeren Extrusionseinflüssen. Bei einer vertikalen Extrusion (z. B. Vorformling) darf sich der extrudierte Schmelzeschlauch nicht auslängen, wodurch die Wanddicke reduziert werden würde, und auch nicht abreißen. Die Größe der durch diese Extrusionstechnik produzierbaren Geometrien wird derzeit durch die Schmelzesteifigkeit des eingesetzten Polyamids limitiert. Um große Dimensionen extrudieren zu können, wird gerade hier eine hohe Schmelzesteifigkeit benötigt.

Die Extrusion einer Polyamidformmasse mit hoher Schmelzesteifigkeit ist wegen der hohen Viskosität jedoch schwierig. Hierfür ist ein außerordentlich hoher Druckaufbau in der Maschine notwendig; trotzdem können auch dann großdimensionale Geometrien nicht bei wirtschaftlich sinnvollen Extrusionsgeschwindigkeiten hergestellt werden, da schon bei kleineren Durchsätzen eine sehr hohe Motorlast vorliegt.

Für dieses Problem wird mit der EP 1 690 889 A1 und der EP 1 690 890 A1 eine Lösung bereitgestellt. Diese Anmeldungen beschreiben ein Verfahren zur Herstellung von Formteilen unter Aufkondensierung einer Polyamidformmasse mit einer Verbindung mit mindestens zwei Carbonateinheiten, wobei eine Vormischung aus der Polyamidformmasse und der Verbindung mit mindestens zwei Carbonateinheiten hergestellt wird und die Vormischung anschließend zum Formteil verarbeitet wird, wobei erst in diesem Schritt die Vormischung aufgeschmolzen wird und die Aufkondensierung erfolgt. Die WO 2010063568 offenbart darüber hinaus, dass eine Verbindung mit mindestens zwei Carbonatgruppen als Masterbatch eingesetzt werden kann, das darüber hinaus ein Polyetheramid enthält, dessen Endgruppen zu mindestens 50 % als Aminogruppen vorliegen.

Die US 4 128 599 beschreibt, dass die Carboxylendgruppen und, in einem geringen Ausmaß, die Aminoendgruppen von Polyamiden mit Polycarbodiimiden reagieren, wobei die Schmelzeviskosität und die Schmelzesteifigkeit ansteigen. Die Reaktion kann in einem Extruder durchgeführt werden; allerdings sind Temperaturen im Bereich von 250 bis 300 °C und vorzugsweise 280 bis 290 °C nötig. Nach Angaben eines Herstellers von Carbodiimide sind Aminogruppen allerdings gegenüber aromatischen Carbodiimide reaktiver als Carboxylgruppen.

Aus der EP 0 567 884 A1 und der DE 44 42 725 A1 ist bekannt, das Polyamidformmassen durch Zusatz von oligomeren oder polymeren Carbodiimiden gegen Hydrolyse stabilisiert werden können. Darüber hinaus lehrt die CH 670 831 A5, dass bei weichmacherhaltigen Polyamidformteilen das Migrieren des Weichmachers vermieden oder zumindest stark reduziert werden kann, wenn sie monomere, oligomere oder polymere Carbodiimide enthalten.

Die Aufgabe der Erfindung besteht darin, Formteile aus einer Polyamidformmasse herzustellen, die einerseits eine Stabilisierung gegen Hydrolyse enthalten und andererseits ein so hohes Molekulargewicht des Polyamids aufweisen, dass daraus folgend ein höheres Maß an Hydrolyse toleriert werden kann, bis die mechanischen Eigenschaften des Formteils so schlecht werden, dass das Formteil versagt.

Diese Aufgabe wird durch ein Verfahren zur Herstellung eines Formteils unter Aufkondensierung einer Polyamidformmasse gelöst, das folgende Schritte enthält:
a) Eine Polyamidformmasse wird bereitgestellt,
b) eine Mischung der Polyamidformmasse und 0,1 bis 5 Gew.-%, vorzugsweise 0,2 bis 2,5 Gew.-% und besonders bevorzugt 0,4 bis 2,0 Gew.-%, bezogen auf die Polyamidformmasse, eines Oligo- oder Polycarbodiimids wird hergestellt, wobei hier im Wesentlichen keine Aufkondensierung erfolgt,
c) die Mischung wird gegebenenfalls gelagert und/oder transportiert und
d) die Mischung wird anschließend zum Formteil verarbeitet, wobei erst in diesem Schritt die Aufkondensierung erfolgt.

Der Begriff "Aufkondensierung" bedeutet die Erhöhung des Molekulargewichts des in der Polyamidformmasse enthaltenen Polyamids und damit die Erhöhung der Schmelzeviskosität und der Schmelzesteifigkeit. Dies kann durch Kettenverlängerung oder durch Verzweigung geschehen.

Das Polyamid ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA6, PA66 oder Copolyamide auf dieser Basis mit Einheiten, die sich von Terephthalsäure und/oder Isophthalsäure herleiten (im Allgemeinen als PPA bezeichnet) sowie PA9T und PA10T und deren Blends mit anderen Polyamiden. In einer bevorzugten Ausführungsform enthalten die Monomereinheiten des Polyamids im Mittel mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA11, PA1014, PA1212 und PA12. Die Herstellung der Polyamide ist Stand der Technik. Selbstverständlich können auch hierauf basierende Copolyamide eingesetzt werden, wobei gegebenenfalls auch Monomere wie Caprolactam mit verwendet werden können.

Das Polyamid kann auch ein Polyetheramid sein. Polyetheramide sind prinzipiell z. B. aus der DE-OS 30 06 961 bekannt. Sie enthalten als Comonomer ein Polyetherdiamin. Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0 434 244; EP-A-0 296 852). Beim Polyetherdiamin kann die Polyethereinheit beispielsweise auf 1.2-Ethandiol, 1.2-Propandiol, 1.3-Propandiol, 1.4-Butandiol oder 1.3-Butandiol basieren. Die Polyethereinheit kann auch gemischt aufgebaut sein, etwa mit statistischer oder blockweiser Verteilung der von den Diolen herrührenden Einheiten. Das Gewichtsmittel der Molmasse der Polyetherdiamine liegt bei 200 bis 5000 g/mol und vorzugsweise bei 400 bis 3000 g/mol; ihr Anteil am Polyetheramid beträgt bevorzugt 4 bis 60 Gew.-% und besonders bevorzugt 10 bis 50 Gew.-%. Geeignete Polyetherdiamine sind durch Konversion der entsprechenden Polyetherdiole durch reduktive Aminierung oder Kupplung an Acrylnitril mit nachfolgender Hydrierung zugänglich; sie sind z. B. in Form der JEFFAMIN^{®} D- oder ED-Typen oder der ELASTAMINE^{®}-Typen bei der Huntsman Corp. oder in Form der Polyetheramin D-Reihe bei der BASF SE kommerziell erhältlich. In geringen Mengen kann auch ein Polyethertriamin mitverwendet werden, z. B. ein JEFFAMIN^{®}T-Typ, falls ein verzweigtes Polyetheramid eingesetzt werden soll. Vorzugsweise setzt man Polyetherdiamine ein, die pro Ethersauerstoff im Mittel mindestens 2,3 Kohlenstoffatome in der Kette enthalten.

Ebenso können auch Mischungen verschiedener Polyamide, ausreichende Verträglichkeit vorausgesetzt, verwendet werden. Verträgliche Polyamidkombinationen sind dem Fachmann bekannt; beispielsweise seien hier die Kombination PA12/PA1012, PA12/PA1212, PA612/PA12, PA613/PA12, PA1014/PA12 und PA610/PA12 sowie entsprechende Kombinationen mit PA11 aufgeführt. Im Zweifelsfall können verträgliche Kombinationen durch Routineversuche ermittelt werden.

In einer möglichen Ausführungsform wird eine Mischung aus 30 bis 99 Gew.-%, bevorzugt 40 bis 98 Gew.-% und besonders bevorzugt 50 bis 96 Gew.-% Polyamid im engeren Sinne sowie 1 bis 70 Gew.-%, bevorzugt 2 bis 60 Gew.-% und besonders bevorzugt 4 bis 50 Gew.-% Polyetheramid verwendet.

Die Endgruppen des Polyamids liegen zu mindestens 50 %, bevorzugt zu mindestens 60 %, besonders bevorzugt zu mindestens 70 %, insbesondere bevorzugt zu mindestens 80 % und ganz besonders bevorzugt zu mindestens 90 % als Aminogruppen vor.

Neben Polyamid kann die Formmasse weitere Komponenten enthalten wie z.B. Schlagzähmodifikatoren, andere Thermoplaste, Weichmacher und andere übliche Zusatzstoffe. Erforderlich ist nur, dass das Polyamid die Matrix der Formmasse bildet.
Geeignete Schlagzähmodifikatoren sind beispielsweise Ethylen/α-Olefin-Copolymere, vorzugsweise ausgewählt aus
a) Ethylen/C₃- bis C₁₂-α-Olefin-Copolymeren mit 20 bis 96, bevorzugt 25 bis 85 Gew.-% Ethylen. Als C₃- bis C₁₂-α-Olefin wird beispielsweise Propen, 1-Buten, 1-Penten, 1-Hexen, 1-Octen, 1-Decen oder 1-Dodecen eingesetzt. Typische Beispiele hierfür sind Ethylen-Propylen-Kautschuk sowie LLDPE und VLDPE.
b) Ethylen/C₃- bis C₁₂-α-Olefin/unkonjugiertes Dien-Terpolymeren mit 20 bis 96, bevorzugt 25 bis 85 Gew.-% Ethylen und bis maximal etwa 10 Gew.-% eines unkonjugierten Diens wie Bicyclo(2.2.1)heptadien, Hexadien-1.4, Dicyclopentadien oder 5-Ethylidennorbornen. Als C₃- bis C₁₂-α-Olefin sind ebenfalls beispielsweise Propen, 1-Buten, 1-Penten, 1-Hexen, 1-Octen, 1-Decen oder 1-Dodecen geeignet.

Die Herstellung dieser Copolymere bzw. Terpolymere, beispielsweise mit Hilfe eines Ziegler-Natta-Katalysators, ist Stand der Technik.

Andere geeignete Schlagzähmodifikatoren sind Styrol-Ethylen/Butylen-Blockcopolymere. Hierbei werden vorzugsweise Styrol-Ethylen/Butylen-Styrol-Blockcopolymere (SEBS) eingesetzt, die durch Hydrierung von Styrol-Butadien-Styrol-Blockcopolymeren erhältlich sind. Es können aber auch Diblocksysteme (SEB) oder Multiblocksysteme verwendet werden. Derartige Blockcopolymere sind Stand der Technik.

Diese Schlagzähmodifikatoren enthalten vorzugsweise Säureanhydridgruppen, die auf bekannte Weise durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht. Geeignete Reagenzien sind beispielsweise Maleinsäure, Maleinsäureanhydrid, Maleinsäuremonobutylester, Fumarsäure, Citraconsäureanhydrid, Aconitsäure oder Itaconsäureanhydrid. Auf diese Weise sind vorzugsweise 0,1 bis 4 Gew.-% eines ungesättigten Anhydrids an den Schlagzähmodifikator aufgepfropft. Gemäß dem Stand der Technik kann das ungesättigte Dicarbonsäureanhydrid oder dessen Vorstufe auch zusammen mit einem weiteren ungesättigten Monomeren wie beispielsweise Styrol, α-Methylstyrol oder Inden aufgepfropft werden.

Andere geeignete Schlagzähmodifikatoren sind Copolymere, die Einheiten der folgenden Monomere enthalten:
a) 20 bis 94,5 Gew.-% eines oder mehrerer α-Olefine mit 2 bis 12 C-Atomen,
b) 5 bis 79,5 Gew.-% einer oder mehrerer acrylischer Verbindungen, ausgewählt aus
   - Acrylsäure bzw. Methacrylsäure bzw. deren Salzen,
   - Estern von Acrylsäure bzw. Methacrylsäure mit einem C1- bis C12-Alkohol, die gegebenenfalls eine freie Hydroxyl- oder Epoxidfunktion tragen können,
   - Acrylnitril bzw. Methacrylnitril,
   - Acrylamiden bzw. Methacrylamiden,
c) 0,5 bis 50 Gew.-% eines olefinisch ungesättigten Epoxids, Carbonsäureanhydrids, Carbonsäureimids, Oxazolins oder Oxazinons.

Dieses Copolymere ist beispielsweise aus folgenden Monomeren zusammengesetzt, wobei diese Aufzählung nicht erschöpfend ist:
a) α-Olefine wie beispielsweise Ethylen, Propen, 1-Buten, 1-Penten, 1-Hexen, 1-Octen, 1-Decen oder 1-Dodecen;
b) Acrylsäure, Methacrylsäure oder deren Salze, beispielsweise mit Na^{⊕} oder Zn^{2⊕} als Gegenion; Methylacrylat, Ethylacrylat, n-Propylacrylat, n-Butylacrylat, Isobutylacrylat, n-Hexylacrylat, n-Octylacrylat, 2-Ethylhexylacrylat, Isononylacrylat, Dodecylacrylat, Methylmethacrylat, Ethylmethacrylat, n-Propylmethacrylat, n-Butylmethacrylat, Isobutylmethacrylat, 2-Ethylhexylmethacrylat, Hydroxyethylacrylat, 4-Hydroxybutylmethacrylat, Glycidylacrylat, Glycidylmethacrylat, Acrylnitril, Methacrylnitril, Acrylamid, N-Methylacrylamid, N,N-Dimethylacrylamid, N-Ethylacrylamid, N-Hydroxyethylacrylamid, N-Propylacrylamid, N-Butylacrylamid, N-(2-Ethylhexyl)acrylamid, Methacrylamid, N-Methylmethacrylamid, N,N-Dimethylmethacrylamid, N-Ethylmethacrylamid, N-Hydroxyethylmethacrylamid, N-Propylmethacrylamid, N-Butylmethacrylamid, N,N-Dibutylmethacrylamid, N-(2-Ethylhexyl)methacrylamid;
c) Vinyloxiran, Allyloxiran, Glycidylacrylat, Glycidylmethacrylat, Maleinsäureanhydrid, Aconitsäureanhydrid, Itaconsäureanhydrid, ferner die aus diesen Anhydriden durch Reaktion mit Wasser entstehenden Dicarbonsäuren; Maleinimid, N-Methylmaleinimid, N-Ethylmaleinimid, N-Butylmaleinimid, N-Phenylmaleinimid, Aconitsäureimid, N-Methylaconitsäureimid, N-Phenylaconitsäureimid, Itaconsäureimid, N-Methylitaconsäureimid, N-Phenylitaconsäureimid, N-Acryloylcaprolactam, N-Methacryloylcaprolactam, N-Acryloyllaurinlactam, N-Methacryloyllaurinlactam, Vinyloxazolin, Isopropenyloxazolin, Allyloxazolin, Vinyloxazinon oder Isopropenyloxazinon.

Bei einer Verwendung von Glycidylacrylat oder Glycidylmethacrylat fungieren diese gleichzeitig auch als acrylische Verbindung b), so dass bei ausreichender Menge des Glycidyl(meth)acrylats keine weitere acrylische Verbindung enthalten zu sein braucht. In dieser speziellen Ausführungsform enthält das Copolymere Einheiten der folgenden Monomere:
a) 20 bis 94,5 Gew.-% eines oder mehrerer α-Olefine mit 2 bis 12 C-Atomen,
b) 0 bis 79,5 Gew.-% einer oder mehrerer acrylischer Verbindungen, ausgewählt aus
   - Acrylsäure bzw. Methacrylsäure bzw. deren Salzen,
   - Estern von Acrylsäure bzw. Methacrylsäure mit einem C₁- bis C₁₂-Alkohol,
   - Acrylnitril bzw. Methacrylnitril,
   - Acrylamiden bzw. Methacrylamiden
c) 0,5 bis 80 Gew.-% eines Esters von Acrylsäure oder Methacrylsäure, der eine Epoxidgruppe enthält,
wobei die Summe von b) und c) mindestens 5,5 Gew.-% ergibt.

Das Copolymere kann in kleiner Menge weitere einpolymerisierte Monomere enthalten, sofern diese die Eigenschaften nicht nennenswert beeinträchtigen, wie beispielsweise Maleinsäuredimethylester, Fumarsäuredibutylester, Itaconsäurediethylester oder Styrol.

Die Herstellung derartiger Copolymerer ist Stand der Technik. Eine Vielzahl verschiedener Typen hiervon ist als Handelsprodukt erhältlich, beispielsweise unter der Bezeichnung LOTADER® (Arkema; Ethylen/Acrylat/Terkomponente bzw. Ethylen/Glycidylmethacrylat).

In einer bevorzugten Ausführungsform enthält die Polyamidformmasse hierbei folgende Komponenten:
1. 60 bis 96,5 Gew.-Teile Polyamid,
2. 3 bis 39,5 Gew.-Teile einer Schlagzähkomponente, die Säureanhydridgruppen enthält, wobei die Schlagzähkomponente ausgewählt ist aus Ethylen/α-Olefin-Copolymeren und Styrol-Ethylen/Butylen-Blockcopolymeren,
3. 0,5 bis 20 Gew.-Teile eines Copolymeren, das Einheiten der folgenden Monomere enthält:
   a) 20 bis 94,5 Gew.-% eines oder mehrerer α-Olefine mit 2 bis 12 C-Atomen,
   b) 5 bis 79,5 Gew.-% einer oder mehrerer acrylischer Verbindungen, ausgewählt aus
      - Acrylsäure bzw. Methacrylsäure bzw. deren Salzen,
      - Estern von Acrylsäure bzw. Methacrylsäure mit einem C₁- bis C₁₂-Alkohol, die gegebenenfalls eine freie Hydroxyl- oder Epoxidfunktion tragen können,
      - Acrylnitril bzw. Methacrylnitril,
      - Acrylamiden bzw. Methacrylamiden,
   c) 0,5 bis 50 Gew.-% eines olefinisch ungesättigten Epoxids, Carbonsäureanhydrids, Carbonsäureimids, Oxazolins oder Oxazinons,
wobei die Summe der Gewichtsteile der Komponenten gemäß 1., 2. und 3. 100 beträgt.

In einer weiteren bevorzugten Ausführungsform enthält die Formmasse hierbei:
1. 65 bis 90 Gew.-Teile und besonders bevorzugt 70 bis 85 Gew.-Teile Polyamid,
2. 5 bis 30 Gew.-Teile, besonders bevorzugt 6 bis 25 Gew.-Teile und insbesondere bevorzugt 7 bis 20 Gew.-Teile der Schlagzähkomponente,
3. 0,6 bis 15 Gew.-Teile und besonders bevorzugt 0,7 bis 10 Gew.-Teile des Copolymeren, welches bevorzugt Einheiten der folgenden Monomere enthält:
   a) 30 bis 80 Gew.-% α-Olefin(e),
   b) 7 bis 70 Gew.-% und besonders bevorzugt 10 bis 60 Gew.-% der acrylischen Verbindung(en),
   c) 1 bis 40 Gew.-% und besonders bevorzugt 5 bis 30 Gew.-% des olefinisch ungesättigten Epoxids, Carbonsäureanhydrids, Carbonsäureimids, Oxazolins oder Oxazinons.

Als Schlagzähkomponente kann darüber hinaus auch Nitrilkautschuk (NBR) oder hydrierter Nitrilkautschuk (H-NBR), die gegebenenfalls funktionelle Gruppen enthalten, verwendet werden. Entsprechende Formmassen sind in der US2003/0220449A1 beschrieben.

Andere Thermoplaste, die in der Polyamidformmasse enthalten sein können, sind in erster Linie Polyolefine. Sie können in einer Ausführungsform, wie weiter oben bei den Schlagzähmodifikatoren beschrieben, Säureanhydridgruppen enthalten und dann gegebenenfalls zusammen mit einem unfunktionalisierten Schlagzähmodifikator vorliegen. In einer weiteren Ausführungsform sind sie nicht funktionalisiert und liegen in der Formmasse in Kombination mit einem funktionalisierten Schlagzähmodifikator oder einem funktionalisierten Polyolefin vor. Der Begriff "funktionalisiert" bedeutet, dass die Polymere gemäß dem Stand der Technik mit Gruppen versehen sind, die mit den Polyamid-Endgruppen reagieren können, z. B. Säureanhydridgruppen, Carboxylgruppen, Epoxidgruppen oder Oxazolingruppen. Hierbei sind folgende Zusammensetzungen bevorzugt:
1. 50 bis 95 Gew.-Teile Polyamid,
2. 1 bis 49 Gew.-Teile funktionalisiertes oder unfunktionalisiertes Polyolefin sowie
3. 1 bis 49 Gew.-Teile funktionalisierter oder unfunktionalisierter Schlagzähmodifikator,
wobei die Summe der Gewichtsteile der Komponenten gemäß 1., 2. und 3. 100 beträgt.

Beim Polyolefin handelt es sich beispielsweise um Polyethylen oder um Polypropylen. Grundsätzlich kann jeder handelsübliche Typ eingesetzt werden. So kommen beispielsweise in Frage: Lineares Polyethylen hoher, mittlerer oder niedriger Dichte, LDPE, Ethylen-Acrylester-Copolymere, Ethylen-VinylacetatCopolymere, isotaktisches oder ataktisches Homopolypropylen, Randomcopolymere von Propen mit Ethen und/oder Buten-1, Ethylen-Propylen-Blockcopolymere und dergleichen mehr. Das Polyolefin kann nach jedem bekannten Verfahren hergestellt werden, beispielsweise nach Ziegler-Natta, nach dem Phillips-Verfahren, mittels Metallocenen oder radikalisch. Das Polyamid kann in diesem Fall auch beispielsweise PA6 und/oder PA66 sein.

In einer möglichen Ausführungsform enthält die Formmasse 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, kann Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure. Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Darüber hinaus kann die Formmasse noch übliche Mengen von Zusatzstoffen enthalten, die zum Einstellen bestimmter Eigenschaften benötigt werden. Beispiele hierfür sind Pigmente bzw. Füllstoffe wie Ruß, Titandioxid, Zinksulfid, Verstärkungsfasern wie z.B. Glasfasern, Verarbeitungshilfsmittel wie Wachse, Zinkstearat oder Calciumstearat, Antioxidantien, UV-Stabilisatoren sowie Zusätze, die dem Produkt antielektrostatische Eigenschaften verleihen wie z. B. Kohlenstofffasern, Graphitfibrillen, Fasern aus rostfreiem Stahl bzw. Leitfähigkeitsruß.

Der Anteil an Polyamid in der Formmasse beträgt mindestens 50 Gew.-%, bevorzugt mindestens 60 Gew.-%, besonders bevorzugt mindestens 70 Gew.-%, insbesondere bevorzugt mindestens 80 Gew.-% und ganz besonders bevorzugt mindestens 90 Gew.-%.

Oligomere und polymere Carbodiimide sind bekannt. Sie können durch Polymerisation von Diisocyanaten hergestellt werden; diese Reaktion wird durch Katalysatoren beschleunigt und erfolgt unter Abspaltung von Kohlendioxid (J. Org. Chem., 28, 2069 (1963); J. Am. Chem. Soc. 84, 3673 (1962); Chem. Rev., 81, 589 (1981); Angew. Chem., 93, 855 (1981). Die reaktiven NCO-Endgruppen können mit C-H-, N-H- oder O-H- reaktiven Verbindungen verkappt werden, beispielsweise mit Malonestern, Caprolactam, Alkoholen oder Phenolen. Alternativ hierzu können auch Mischungen von Mono- und Diisocyanaten polymerisiert werden; die entstehenden Oligo- oder Polycarbodiimide besitzen im Wesentlichen nicht reaktive Endgruppen.

Die erfindungsgemäß eingesetzten Oligo- oder Polycarbodiimide haben die allgemeine Formel 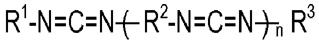
- mit R¹ und R³ =: Alkyl mit 1 bis 20 C-Atomen, Cycloalkyl mit 5 bis 20 Atomen, Aryl mit 6 bis 20 C-Atomen oder Aralkyl mit 7 bis 20 C-Atomen, jeweils gegebenenfalls substituiert mit einer Isocyanatgruppe, die gegebenenfalls mit einer C-H-, einer N-H- oder einer O-H-reaktiven Verbindung verkappt ist;
- R² =: Alkylen mit 2 bis 20 C-Atomen, Cycloalkylen mit 5 bis 20 C-Atomen, Arylen mit 6 bis 20 C-Atomen oder Aralkylen mit 7 bis 20 C-Atomen;
- n =: 1 bis 100, bevorzugt 2 bis 80 und besonders bevorzugt 3 bis 70.

Das Oligo- oder Polycarbodiimid kann ein Homopolymerisat oder ein Copolymerisat sein, beispielsweise ein Copolymerisat aus 2,4-Diisocyanato-1,3,5-triisopropyl-benzol und 1,3-Diisocyanato-3,4-diisopropyl-benzol.

Geeignete Oligo- und Polycarbodiimide sind kommerziell erhältlich.

Das Oligo- oder Polycarbodiimid wird im Verfahrensschritt b) mit der Polyamidformmasse entweder trocken vorgemischt, z. B. aufgepudert oder als Granulatmischung eingebracht, oder es wird in die Schmelze der Polyamidformmasse so eingearbeitet, dass im Wesentlichen keine Aufkondensierungsreaktion erfolgt. Im Wesentlichen keine Aufkondensierungsreaktion erfolgt dann, wenn die Schmelzeviskosität bei gleichbleibender Temperatur und Scherung höchstens um 20 %, vorzugsweise höchstens um 15 % und besonders bevorzugt höchstens um 10 % zunimmt. Ziel ist nämlich, die Motorlast der Maschine, beispielsweise des Extruders, im Verfahrensschritt d) im üblichen Rahmen zu halten; ein größeres Ansteigen der Motorlast würde zu einer niedrigen Verarbeitungsgeschwindigkeit, zu hohem Energieeintrag in die Schmelze und damit zu Kettenabbau durch Temperaturbelastung und Scherung führen. Falls daher im Schritt b) das Oligo- oder Polycarbodiimid in die Schmelze der Polyamidformmasse eingearbeitet wird, ist darauf zu achten, dass die Verweilzeit ausreichend gering ist und die Schmelzetemperatur niedrig bleibt. Richtwert ist eine maximale Schmelzetemperatur von 250 °C, vorzugsweise von 240 °C und besonders bevorzugt von 230 °C.

Die Verarbeitung im Verfahrensschritt d) wird dann vorzugsweise im Temperaturbereich zwischen 240 und 320 °C und besonders bevorzugt im Temperaturbereich zwischen 250 und 310 °C durchgeführt. Unter diesen Bedingungen reagieren die Carbodiimidgruppen ausreichend schnell mit den Endgruppen des Polyamids. Vorzugsweise besitzt das aufkondensierte Polyamid im Formteil eine korrigierte inhärente Viskosität CIV, bestimmt gemäß API Technical Report 17 TR2, First Edition, June 2003, Appendix D, von mindestens 2,0 dl/g, besonders bevorzugt von mindestens 2,1 dl/g und insbesondere bevorzugt von mindestens 2,2 dl/g. Die dort für PA11 beschriebene Vorgehensweise kann für alle Polyamide verallgemeinert werden. Sie entspricht ISO 307:1994, jedoch mit 20 °C im Bad statt 25 °C.

Das Oligo- oder Polycarbodiimid ist vorzugsweise so zu dosieren, dass es im Schritt d) nicht vollständig für das Aufkondensieren des Polyamids verbraucht wird. Besonders bevorzugt enthält die Polyamidformmasse des Formteils mindestens 2 mäq/kg an Carbodiimidgruppen, insbesondere bevorzugt mindestens 5 mäq/kg, ganz besonders bevorzugt mindestens 10 mäq/kg und im Speziellen mindestens 15 mäq/kg beziehungsweise mindestens 20 mäq/kg.

In einer möglichen Ausführungsform wird das Oligo- oder Polycarbodiimid als Masterbatch in Polyamid bzw. bevorzugt in Polyetheramid eingesetzt. Vorzugsweise verwendet man ein Polyetheramid, dessen Endgruppen zu mindestens 50%, vorzugsweise zu mindestens 60%, besonders bevorzugt zu mindestens 70%, insbesondere bevorzugt zu mindestens 80% und ganz besonders bevorzugt zu mindestens 90% aus Aminogruppen bestehen. Damit minimiert man das Einschleppen von Carboxylendgruppen, die die Hydrolysestabilität des Polyamids verringern. Überraschenderweise hat es sich gezeigt, dass ein aminoendgruppenreiches Polyetheramid in der Schmelze, also bei der Herstellung des Masterbatches sowie bei den Verarbeitungsschritten gemäß d) und e) nicht oder nur in geringem Umfang mit dem Oligo- oder Polycarbodiimid reagiert. Der Grund für die geringe Reaktivität der Aminoendgruppen des Polyetheramids ist unbekannt; möglicherweise ist sterische Hinderung die Ursache.

Die Konzentration des Oligo- oder Polycarbodiimids im Masterbatch beträgt vorzugsweise 0,15 bis 40 Gew.-%, besonders bevorzugt 0,2 bis 25 Gew.-% und insbesondere bevorzugt 0,3 bis 15 Gew.-%. Die Herstellung eines solchen Masterbatches erfolgt in der üblichen, dem Fachmann bekannten Weise, insbesondere durch Mischen in der Schmelze.

In einer weiteren bevorzugten Ausführungsform wird das Oligo- oder Polycarbodiimid zunächst im Schritt b) mit einer Polyamidformmasse, deren Polyamidanteil einen Überschuss an Carboxylendgruppen gegenüber Aminoendgruppen besitzt, unter Bedingungen gemischt, bei denen im Wesentlichen keine Reaktion stattfindet. Die Endgruppen dieses Polyamids bestehen zu mehr als 50%, vorzugsweise zu mindestens 60%, besonders bevorzugt zu mindestens 70%, insbesondere bevorzugt zu mindestens 80% und ganz besonders bevorzugt zu mindestens 90% aus Carboxylgruppen. Im Schritt d) werden dann 50 bis 80 Gew.-% und vorzugsweise 60 bis 75 Gew.-% dieser Mischung zusammen mit 20 bis 50 Gew.-% und vorzugsweise 25 bis 40 Gew.-% einer Polyamidformmasse, deren Polyamidanteil einen Überschuss an Aminoendgruppen gegenüber Carboxylendgruppen besitzt, in der Schmelze gemischt. Die Prozentangaben beziehen sich hier auf die Summe dieser beiden Komponenten. Die Endgruppen dieses zweiten Polyamids bestehen zu mehr als 50%, vorzugsweise zu mindestens 60%, besonders bevorzugt zu mindestens 70%, insbesondere bevorzugt zu mindestens 80% und ganz besonders bevorzugt zu mindestens 90% aus Aminogruppen. Bei dieser Ausführungsform findet die Aufkondensierung in erster Linie über die Reaktion der Aminoendgruppen mit den Carbodiimidgruppen statt. Die erzielte Schmelzesteifigkeit kann hierbei über die Menge an Aminoendgruppen gesteuert werden. Dies zeigt, dass die Reaktivität der Aminoendgruppen tatsächlich deutlich größer ist als die der Carboxylendgruppen. Dadurch wird es ermöglicht, insgesamt eine höhere Menge an Oligo- oder Polycarbodiimid zuzugeben, ohne dass im Schritt d) ein exzessiver Schmelzviskositätsaufbau bis hin zu einer Vernetzung stattfinden kann, um damit ein Formteil zu erhalten, das besonders gut hydrolysestabilisiert ist.

In einer weiteren möglichen Ausführungsform wird das Oligo- oder Polycarbodiimid zusammen mit einem weiteren mindestens difunktionellen aminreaktiven Additiv eingesetzt. Dies ist vorzugsweise eine Verbindung mit mindestens zwei Carbonateinheiten. Unter Carbonateinheiten sind hier Diestereinheiten der Kohlensäure mit Alkoholen oder Phenolen zu verstehen. Das weitere aminreaktive Additiv bzw. die Verbindung mit mindestens zwei Carbonateinheiten wird vorzugsweise in einer Menge von 0,1 bis 5 Gew.-% eingesetzt, bezogen auf die eingesetzte Polyamidformmasse, besonders bevorzugt in einer Menge von 0,2 bis 2,5 Gew.-% und insbesondere bevorzugt in einer Menge von 0,4 bis 2,0 Gew.-%.

Die Verbindung mit mindestens zwei Carbonateinheiten kann niedermolekular, oligomer oder polymer sein. Sie kann vollständig aus Carbonateinheiten bestehen oder sie kann noch weitere Einheiten aufweisen. Diese sind vorzugsweise Oligo- oder Polyamid-, -ester-, -ether-, -etheresteramid- oder -etheramideinheiten. Solche Verbindungen können durch bekannte Oligo- oder Polymerisationsverfahren bzw. durch polymeranaloge Umsetzungen hergestellt werden.

In einer bevorzugten Ausführungsform handelt es sich bei der Verbindung mit mindestens zwei Carbonateinheiten um ein Polycarbonat, beispielsweise auf Basis von Bisphenol A, bzw. um ein Blockcopolymeres, das einen derartigen Polycarbonatblock enthält.

Geeignete Verbindungen mit mindestens zwei Carbonateinheiten sind in der WO 00/66650, auf die hier ausdrücklich Bezug genommen wird, ausführlich beschrieben.

Das weitere mindestens difunktionelle aminreaktive Additiv wird vorzugsweise als Masterbatch dosiert. Im Rahmen der Erfindung können das Oligo- oder Polycarbodiimid als auch das weitere mindestens difunktionelle aminreaktive Additiv jeweils als separates Masterbatch eingesetzt werden. Vorzugsweise wird jedoch ein einziges Masterbatch eingesetzt, das sowohl das Oligo- oder Polycarbodiimid als auch das weitere mindestens difunktionelle aminreaktive Additiv enthält.

Die Konzentration des aminreaktiven Additivs bzw. der Verbindung mit mindestens zwei Carbonateinheiten im Masterbatch beträgt vorzugsweise 0,15 bis 40 Gew.-%, besonders bevorzugt 0,2 bis 25 Gew.-% und insbesondere bevorzugt 0,3 bis 15 Gew.-%. Wenn das Masterbatch sowohl das Oligo- oder Polycarbodiimid als auch das weitere aminreaktive Additiv enthält, beträgt der Gesamtgehalt beider Additive im Masterbatch vorzugsweise 0,3 bis 40 Gew.-%, besonders bevorzugt 0,4 bis 25 Gew.-% und insbesondere bevorzugt 0,6 bis 15 Gew.-%. Die Herstellung eines solchen Masterbatches erfolgt in der üblichen, dem Fachmann bekannten Weise, insbesondere durch Mischen in der Schmelze.

Bevorzugt mischt man bei der Verarbeitung die aufzukondensierende Polyamidformmasse als Granulat mit dem Granulat des Masterbatches. Es kann aber auch eine Granulatmischung der fertig compoundierten Polyamidformmasse mit dem Masterbatch hergestellt, anschließend transportiert oder gelagert und danach verarbeitet werden. Entsprechend kann natürlich auch mit Pulvermischungen verfahren werden. Entscheidend ist, dass die Mischung erst bei der Verarbeitung aufgeschmolzen wird. Eine gründliche Vermischung der Schmelze bei der Verarbeitung ist empfehlenswert. Das Masterbatch kann genauso gut jedoch auch als Schmelzestrom mit Hilfe eines beigestellten Extruders in die Schmelze der zu verarbeitenden Polyamidformmasse zudosiert und dann gründlich eingemischt werden. In dieser Ausführungsform fallen die Verfahrensschritte b) und d) zusammen.

Die durch Umsetzung der Polyamidformmasse mit dem Oligo- oder Polycarbodiimid sowie gegebenenfalls dem weiteren aminreaktiven Additiv erhaltene Schmelzemischung wird ausgetragen und verfestigt. Dies kann beispielsweise auf folgende Weisen geschehen:
- Die Schmelze wird als Profil extrudiert, beispielsweise als Rohr.
- Die Schmelze wird zu einem Schlauch ausgeformt, welcher zur Beschichtung auf ein Rohr aufgebracht wird.
- Die Schmelze wird als Folie oder Platte extrudiert; diese können anschließend gegebenenfalls monoaxial oder biaxial gestreckt und/oder um ein Formstück gewickelt werden. Die Folie oder Platte kann auch vor der Weiterverarbeitung tiefgezogen werden.
- Die Schmelze wird zu Vorformlingen extrudiert, die anschließend in einem Blasformverfahren verformt werden.
- Die Schmelze wird in einem Spritzgießprozess zu einem Formteil verarbeitet.

Die erfindungsgemäß hergestellten Formteile sind in einer Ausführungsform Hohlkörper oder Hohlprofile, insbesondere mit großen Durchmessern, beispielsweise Liner, Gasleitungsrohre, Schichten von Offshore-Leitungen, Subsea-Leitungen oder Versorgungsleitungen, Raffinerieleitungen, Hydraulikleitungen, Chemikalienleitungen, Kabelkanäle, Tankstellenversorgungsleitungen, Belüftungsleitungen, Luftansaugrohre, Tankeinfüllstutzen, Kühlmittelleitungen, Vorratsbehälter und Kraftstofftanks. Derartige Formteile sind herstellbar beispielsweise durch Extrusion, Coextrusion oder Blasformen einschließlich Saugblasformen, 3-D-Blasformen, Schlaucheinlege- und Schlauchmanipulationsverfahren. Diese Verfahren sind Stand der Technik.

Die Wandung dieser Hohlkörper oder Hohlprofile kann hierbei entweder einschichtig sein und in diesem Fall vollständig aus der anspruchsgemäß verarbeiteten Formmasse bestehen, sie kann aber auch mehrschichtig sein, wobei die erfindungsgemäß verarbeitete Formmasse die Außenschicht, die Innenschicht und/oder die Mittelschicht bilden kann. Die Wandung kann aus einer Vielzahl von Schichten bestehen; die Anzahl der Schichten richtet sich nach dem Anwendungszweck. Die andere Schicht bzw. die anderen Schichten bestehen aus Formmassen auf Basis anderer Polymerer, beispielsweise von Polyethylen, Polypropylen, Fluorpolymeren, oder aus Metall, beispielsweise Stahl. Beispielsweise sind die für Offshore-Leitungen verwendeten flexiblen Leitungen mehrschichtig aufgebaut; sie bestehen in der Regel aus einer Stahlstruktur, die mindestens eine Polymerschicht und in der Regel mindestens zwei Polymerschichten enthält. Derartige "Unbonded Flexible Pipes" sind beispielsweise in der WO 01/61232, der US 6 123 114 und der US 6 085 799 beschrieben; sie sind darüber hinaus in API Recommended Practice 17B, "Recommended Practice for Flexible Pipe", 3. Auflage, März 2002 sowie in API Specification 17J, "Specification for Unbonded Flexible Pipe", 2. Auflage, November 1999 näher charakterisiert. Der Ausdruck "unbonded" bedeutet in diesem Zusammenhang, dass mindestens zwei der Schichten, einschließlich Armierungsschichten und Kunststoffschichten, nicht konstruktiv miteinander verbunden sind. In der Praxis enthält das Rohr mindestens zwei Armierungsschichten, die über die Rohrlänge hinweg weder direkt noch indirekt, d. h. über weitere Schichten, miteinander verbunden sind. Dadurch wird das Rohr biegsam und ausreichend flexibel, um es für Transportzwecke aufzurollen. Die Polymerschichten übernehmen dabei zum einen die Funktion des Abdichtens des Rohres, so dass das transportierte Fluid nicht austreten kann, zum anderen, wenn die Schicht außen liegt, die Funktion des Schutzes der Stahlschichten gegen das umliegende Meerwasser. Die gegen das transportierte Fluid abdichtende Polymerschicht ist in einer Ausführungsform auf einer innen liegenden Karkasse extrudiert. Diese Polymerschicht, häufig auch Barriereschicht genannt, kann, wie oben beschrieben, wiederum aus mehreren Polymerschichten bestehen.

Durch den Einsatz von Polyetheramid im Masterbatch oder in der eingesetzten Polyamidformmasse kann vorteilhafterweise die Flexibilität der Formmasse so erhöht werden, dass gegebenenfalls eine weitere Weichmachung durch externe Weichmacher entfallen kann. Dies hat den Vorteil, dass auch bei Kontakt mit stark extrahierenden Medien, wie z. B. überkritischem Kohlendioxid, die Materialeigenschaften konstant bleiben.

Bei Mitverwendung einer Verbindung mit mindestens zwei Carbonateinheiten wird einerseits ein besonders effizienter Molekulargewichtsaufbau des Polyamids erzielt; andererseits wird auf diese Weise sichergestellt, dass die Reaktion des Oligo- oder Polycarbodümids mit den Aminoendgruppen des Polyamids zurückgedrängt wird und auf diese Weise ein ausreichender Anteil an nicht abreagierten Carbodiimidgruppen im Produkt erhalten bleibt.

Die Erfindung wird nachfolgend beispielhaft erläutert.

### Beispiele 1 und 2 sowie Vergleichsbeispiel 1:

Zunächst wurden folgende Compounds hergestellt:
Compound 1: 100 Gew.-Teile eines PA12 mit einem Überschuss an Carboxylendgruppen (VESTAMID^{®} X1852) wurden mit 2 Gew.-Teilen Stabaxol P 400 (Polycarbodiimid der Firma Rhein Chemie Rheinau GmbH, Mannheim) in einem Doppelschneckenkneter bei 220 °C gemischt, extrudiert und granuliert.
Compound 2: 100 Gew.-Teile VESTAMID^{®} X1852 wurden mit 2 Gew.-Teilen Stabaxol P 400 und 1,5 Gew.-Teilen Brüggolen M1251, einem Kettenverlängerer für Polyamide, der aus einer Mischung aus niedermolekularem Polycarbonat und PA6 besteht (L. Brüggemann KG, Heilbronn, Deutschland) in einem Doppelschneckenkneter bei 220 °C gemischt, extrudiert und granuliert.
Compound 3 (Vergleich): 100 Gew.-Teile VESTAMID^{®} X1852 wurden mit 1,5 Gew.-Teilen Brüggolen M1251 in einem Doppelschneckenkneter bei 220 °C gemischt, extrudiert und granuliert.
Compound 4: VESTAMID^{®} ZA7295, ein PA12 mit einem Überschuss an Aminoendgruppen.

Die Reaktivkomponenten (Compound 1, Compound 2, Compound 3) wurden jeweils im Verhältnis 1 : 3 mit dem Compound 4 als Granulat gemischt. Aus diesen Granulatmischungen wurden 10 x 1-Rohre (Außendurchmesser 10 mm, Wandstärke 1 mm) extrudiert und diese der Hydrolyseuntersuchung bei 120 °C zugeführt. Die Ergebnisse sind in der Tabelle 1 wiedergegeben.

**Tabelle 1: Beispiele 1 und 2 sowie Vergleichsversuch 1; Zusammensetzung und Hydrolyseergebnisse**

| | | Beispiel 1 | Beispiel 2 | Vergleichsbeispiel 1 |
|---|---|---|---|---|
| Compound 1 [Gew.-Teile] | | 25 | | |
| Compound 2 [Gew.-Teile] | | | 25 | |
| Compound 3 [Gew.-Teile] | | | | 25 |
| Compound 4 [Gew.-Teile] | | 75 | 75 | 75 |
| CIV [dl/g] | 0 | 1,922 | 2,571 | 1,900 |
| nach Lagerdauer [d] | 4 | 1,906 | 2,507 | 1,793 |
| | 10 | 1,705 | 2,078 | 1,521 |
| | 17 | 1,487 | 1,722 | 1,301 |
| | 24 | 1,344 | 1,501 | 1,184 |
| | 41 | 1,166 | 1,258 | 1,071 |
| | 59 | 1,127 | 1,188 | 1,056 |
| | 80 | 1,098 | 1,142 | 1,054 |

### Beispiele 3 und 4 sowie Vergleichsbeispiel 2:

Es wurden zunächst folgende Compounds hergestellt:
Compound 5: 100 Gew.-Teile eines Polyetheramids mit PA12-Hartblöcken und 43 Gew.-% Weichblöcken auf Basis von Polyetherdiamin und einem Molekulargewicht von etwa 2000 wurden mit 3 Gew.-Teilen Stabaxol P 400 in einem Doppelschneckenkneter bei 220 °C gemischt, extrudiert und granuliert.
Compound 6: 100 Gew.-Teile des gleichen Polyetheramids wurden mit 3 Gew.-Teilen Stabaxol P 400 und 3 Gew.-Teilen Brüggolen M1251 in einem Doppelschneckenkneter bei 220 °C gemischt, extrudiert und granuliert.
Compound 7 (Vergleich): 100 Gew.-Teile des gleichen Polyetheramids wurden mit 3 Gew.-Teilen Brüggolen M1251 in einem Doppelschneckenkneter bei 220 °C gemischt, extrudiert und granuliert.

Die Reaktivkomponenten (Compound 5, Compound 6 und Compound 7) wurden jeweils im Verhältnis 15 : 85 mit dem Compound 4 als Granulat gemischt. Aus diesen Granulatmischungen wurden 10 x 1-Rohre extrudiert; am Rohrmaterial wurden anschließend die Schmelzescherkurven bestimmt (Platte-Platte PP25 (h = 1,0 mm), T = 240 °C). Demzufolge fand ein deutlicher Viskositätsaufbau während des Extrusionsprozesses statt, wobei insbesondere die Kombination aus Stabaxol und Brüggolen zu einer sehr hohen Schmelzesteifigkeit und insbesondere Schmelzefestigkeit führte, was für die Extrusion von Großrohren notwendig ist. Die Ergebnisse sind in der Tabelle 2 dargestellt.

In den anschließenden Hydrolyseversuchen an diesen Rohren konnte bei zwei verschiedenen Temperaturen (100 °C und 120 °C) ein deutlicher Vorteil der Verwendung von Stabaxol, insbesondere auch bei Kombination mit Brüggolen M1251, nachgewiesen werden; siehe Tabelle 2.

**Tabelle 2: Beispiele 3 und 4 sowie Vergleichsbeispiel 2; Zusammensetzung, Schmelzeviskosität und Hydrolyseergebnisse**

| | Beispiel 3 | Beispiel 4 | Vergleichsbeispiel 2 |
|---|---|---|---|
| Compound 5 [Gew.-Teile] | 15 | | |
| Compound 6 [Gew.-Teile] | | 15 | |
| Compound 7 [Gew.-Teile] | | | 15 |
| Compound 4 [Gew.-Teile] | 85 | 85 | 85 |
| Viskosität [Pas] bei Kreisfrequenz [1/s] | | | |
| 0,1 | 88447 | 482000 | 22398 |
| 0,15849 | 75420 | 387000 | 22400 |
| 0,25119 | 62479 | 302000 | 21217 |
| 0,39811 | 50526 | 222000 | 19474 |
| 0,63096 | 39808 | 161000 | 17292 |
| 1 | 30853 | 116000 | 15113 |
| 1,58489 | 23664 | 82690 | 12995 |
| 2,51189 | 18042 | 59241 | 11085 |
| 3,98107 | 13751 | 42879 | 9416 |
| 6,30957 | 10524 | 31295 | 7955 |
| 10 | 8105 | 22912 | 6691 |
| 15,8489 | 6279 | 16768 | 5590 |
| 25,1189 | 4883 | 12236 | 4626 |
| 39,8107 | 3802 | 8879 | 3780 |
| 63,0957 | 2959 | 6405 | 3050 |
| 100 | 2289 | 4577 | 2418 |
| 158,489 | 1759 | 3253 | 1887 |
| 251,189 | 1342 | 2298 | 1454 |
| 398,107 | 1025 | 1636 | 1116 |
| CIV [dl/g] nach Lagerdauer [d] bei 100 °C | | | |
| 0 | 2,136 | 2,417 | 1,892 |
| 24 | 2,227 | 3,113 | 1,769 |
| 50 | 1,913 | 2,457 | 1,503 |
| 101 | 1,514 | 1,821 | 1,193 |
| 199 | 1,225 | 1,29 | 1,008 |
| bei 120 °C 0 | 2,136 | 2,417 | 1,892 |
| 7 | 2,058 | 2,931 | 1,66 |
| 14 | 1,724 | 2,294 | 1,389 |
| 30 | 1,288 | 1,529 | 1,065 |
| 51 | 1,103 | 1,174 | 0,974 |
| 70 | 1,054 | 0,967 | 0,982 |

## Patentansprüche

1. Verfahren zur Herstellung eines Formteils unter Aufkondensierung einer Polyamidformmasse, das folgende Schritte enthält:
a) Eine Polyamidformmasse wird bereitgestellt, wobei die Endgruppen des Polyamids zu mindestens 50 % als Aminogruppen vorliegen,
b) eine Mischung der Polyamidformmasse und 0,1 bis 5 Gew.-%, bezogen auf die Polyamidformmasse, eines Oligo- oder Polycarbodiimids wird hergestellt, wobei hier im Wesentlichen keine Aufkondensierung erfolgt,
c) die Mischung wird gegebenenfalls gelagert und/oder transportiert und
d) die Mischung wird anschließend zum Formteil verarbeitet, wobei erst in diesem Schritt die Aufkondensierung erfolgt.

2. Verfahren gemäß Anspruch 1,
**dadurch gekennzeichnet,**
**dass** das Oligo- oder Polycarbodiimid als Masterbatch in Polyamid oder Polyetheramid eingesetzt wird.

3. Verfahren gemäß Anspruch 2,
**dadurch gekennzeichnet,**
**dass** die Konzentration des Oligo- oder Polycarbodiimids im Masterbatch 0,15 bis 40 Gew.-% beträgt.

4. Verfahren gemäß einem der vorhergehenden Ansprüche,
**dadurch gekennzeichnet,**
**dass** zusammen mit dem Oligo- oder Polycarbodiimid 0,1 bis 5 Gew.-% eines weiteren mindestens difunktionellen aminreaktiven Additivs, bezogen auf die eingesetzte Formmasse, verwendet wird.

5. Verfahren gemäß Anspruch 4,
**dadurch gekennzeichnet,**
**dass** das weitere mindestens difunktionelle aminreaktive Additiv eine Verbindung mit mindestens zwei Carbonateinheiten ist.

6. Verfahren gemäß einem der Ansprüche 4 und 5,
**dadurch gekennzeichnet,**
**dass** das weitere mindestens difunktionelle aminreaktive Additiv ebenfalls als Masterbatch eingesetzt wird, wobei die Konzentration dieses Additivs im Masterbatch 0,15 bis 40 Gew.-% beträgt.

7. Verfahren gemäß Anspruch 6,
**dadurch gekennzeichnet,**
**dass** das Masterbatch sowohl das Oligo- oder Polycarbodiimid als auch das weitere mindestens difunktionelle aminreaktive Additiv enthält.

8. Verfahren gemäß einem der Ansprüche 2 bis 7,
**dadurch gekennzeichnet,**
**dass** im Schritt d) eine Mischung aus dem Granulat der aufzukondensierenden Formmasse und dem Granulat des Masterbatches eingesetzt wird.

9. Verfahren gemäß einem der Ansprüche 2 bis 7,
**dadurch gekennzeichnet,**
**dass** die Schritte b) und d) zusammenfallen, indem das Masterbatch als Schmelzestrom in die Schmelze der zu verarbeitenden Polyamidformmasse zudosiert wird.

10. Verfahren gemäß einem der vorhergehenden Ansprüche,
**dadurch gekennzeichnet,**
**dass** der Schritt d) im Temperaturbereich zwischen 240 und 320 °C durchgeführt wird.

11. Verfahren gemäß einem der vorhergehenden Ansprüche,
**dadurch gekennzeichnet,**
**dass** das Polyamid im Formteil eine korrigierte inhärente Viskosität CIV, bestimmt gemäß API Technical Report 17 TR2, First Edition, June 2003, Appendix D, von mindestens 2,0 dl/g besitzt.
